# EUROPÄISCHE PATENTANMELDUNG

(11) **EP 1 151 658 A1**
(43) Veröffentlichungstag der Anmeldung: **07.11.2001**
(21) Anmeldenummer: 01107534.8
(22) Anmeldetag: 27.03.2001
(51) Int. Cl.: A01F 29/10

(54) **Erntemaschine, insbesondere selbstfahrender Feldhäcksler**

(30) Priorität: 04.05.2000 DE 10021663
(71) Anmelder: Maschinenfabrik Bernard Krone GmbH, 48480 Spelle (DE)
(72) Erfinder: Krone, Bernhard, Dr. Ing. E.h, 48480 Spelle (DE); Strobel, Thomas, Dipl.-Ing., 01833 Stolpen OT Langenwolmsdorf (DE)
(74) Vertreter: Busse & Busse Patentanwälte

(57) **Zusammenfassung**

Die Erfindung bezieht sich auf eine Erntemaschine, insbesondere einen selbstfahrenden Feldhäcksler zum Aufnehmen und Häckseln von Mais, Anwelkgras, Grünfutter und dergleichen Erntegut, mit einem einer Häckseleinrichtung 7 vorgeordneten, antreibbare Einzugswalzen 9 aufnehmenden Einzugsgehäuse. Um insbesondere eine Erntemaschine geschaffen zu haben, die sich an verschiedene Einsatzbedingungen anpassen läßt, ist vorgesehen, daß mehr als zwei in Einzugsförderrichtung hintereinander angeordnete Einzugswalzenpaare 9 vorgesehen sind, deren jeweils obere Walzen 9 über einen gemeinsamen Antrieb 17, 18 antreibbar sind, wobei der gemeinsame Antrieb 17, 18 zur höhenveränderlichen Anpassung der oberen Walzen 9 zumindest ein das Einzugsgehäuse 8 durchsetzendes, lageveränderliches Antriebselement 17 aufweist und dieses Antriebselement 17 und die oberen Walzen 9 jeweils in einzuggehäuseseitigen Führungen 13, 14, 15, 16 gleitverschieblich angeordnet sind (Fig. 5).

## Beschreibung

Die Erfindung bezieht sich auf eine Erntemaschine, insbesondere auf einen selbstfahrenden Feldhäcksler zum Aufnehmen und Häckseln von Mais, Anwelkgras, Grünfutter und dergleichen Erntegut, mit einem einer Häckseleinrichtung vorgeordneten, antreibbare Einzugswalzen aufnehmenden Einzugsgehäuse.

Erntemaschinen der vorgenannten Art sind in vielfältiger Ausgestaltung bekannt. Solche Maschinen, insbesondere auch selbstfahrende Feldhäcksler,
haben sich in den letzten Jahren zu sehr starken Maschinen entwickelt, die neben dem Mähen und Ernten von Mais auch zunehmend zum Häckseln von Welkgut, Heu, Stroh und sonstigem Erntegut Einsatz finden. Dazu sind dem Einzugsgehäuse z. B. eine Pickup, ein Maisgebiß oder ein sonstiger Vorsatz vorgeordnet.

In zunehmendem Maße wird dabei im übrigen auch gefordert, daß Erntemaschinen an Einsatzbedingungen anpaßbar sind, und zwar mit einem relativ geringen Umrüstaufwand. So ist auch in vielen Fällen anzustreben, z. B. auch die Schnittlänge zu verändern, wozu herkömmlicherweise bei bekannten Maschinen Messeranordnungen zu verändern sind. Werden beispielsweise Einzugswalzen mit einer höheren Geschwindigkeit angetrieben, reicht vielfach die Einzugsstrecke bishin zur Förderwalze nicht aus, um z. B. detektierte Fremdkörper zu ermitteln und die Vorrichtung hinreichend schnell zu stoppen, um ein Eindringen von Fremdkörpern in die Häckseleinrichtung zu verhindern.

Es ist Aufgabe der vorliegenden Erfindung, eine Erntemaschine der eingangs genannten Art zu schaffen, die Voraussetzungen zur Anpassung an verschiedene Erntebedingungen aufweist.

Zur Lösung dieser Aufgabe zeichnet sich die Erntemaschine der eingangs genannten Art dadurch aus, daß mehr als zwei in Einzugsförderrichtung hintereinander angeordnete Einzugwalzenpaare vorgesehen sind, deren jeweils obere Walzen über einen gemeinsamen Antrieb antreibbar sind, wobei der gemeinsame Antrieb zur höhenveränderlichen Anpassung der oberen Walzen zumindest ein das Einzugsgehäuse durchsetzendes, lageveränderliches Antriebselement aufweist und das Antriebselement und die oberen Walzen jeweils in einzugsgehäuseseitigen Führungen gleitverschieblich angeordnet sind.

Damit ist eine Erntemaschine zur Verfügung gestellt, die an unterschiedliche Einsatzbedingungen anpaßbar ist. So sind die von einem gemeinsamen Antrieb antreibbaren, gleitverschieblichen oberen Einzugswalzen an unterschiedliche Gutströme ohne das Erfordernis von manuellen Justierarbeiten durch Veränderung der Antriebsgeschwindigkeit automatisch anzupassen, wobei das Antriebselement der Lageanpassung folgen kann, ohne daß es manueller Nachstellarbeiten bedarf.

Des weiteren sind durch den gemeinsamen Antrieb und die mehr als zwei in Einzugsförderrichtung hintereinander angeordneten Einzugswalzenpaare die Voraussetzungen geschaffen, unterschiedliche Schnittlängen des Erntegutes dahingehend zu realisieren, daß noch eine hinreichende Einzugsstrecke verbleibt, um auch bei höheren Geschwindigkeiten die Einzugsvorrichtung bei detektierten Fremdkörpern so rechtszeitig zu stoppen, daß die detektierten Fremdkörper nicht in die Häckseleinrichtung gelangen. Bevorzugtermaßen ist dazu ein Antrieb dergestalt vorgesehen, daß die Einzugswalzen steuerbar angetrieben werden. Der dazu erforderliche Bauaufwand ist gegenüber herkömmlichen Maschinen wesentlich vermindert, da alles von einer gemeinsamen antriebsmäßigen Kopplung zu bewerkstelligen ist.

Durch das das Einzugsgehäuse durchsetzende Antriebselement ist auch das Einzugsgehäuse von seinen äußeren Abmessungen dahingehend genutzt, daß auch Lageveränderungen ohne zusätzlichen Bauaufwand an sonstigen Stellen durchgeführt werden können. Eine Veränderung der Schnittlänge des Erntegutes ist durch eine Steuerung der Geschwindigkeit der Einzugswalzen ohne das Erfordernis von Veränderungen von Messeranordnungen zu vollziehen. Bevorzugterweise kann die Antriebsgeschwindigkeitssteuerung auch in Abhängigkeit der Feuchtigkeit des Erntegutes mit Hilfe von Feuchtigkeitssensoren erfolgen, die über eine Steuerelektronik auf den Antrieb der Einzugswalzen wirkt. Zusätzlich ist bei Ausrüstung der Maschine mit einem Korncracker über die Feuchtemessung auch ein Abstand von Quetschwalzen ein Korncracker zur Optimierung der Erntegutaufbereitung zu verändern. Insgesamt ist damit eine Erntemaschine zur Verfügung gestellt, die sich bei geringem Bauaufwand und ohne nennenswerten Umrüstbedarf unterschiedlichen Einsatzbedingungen automatisch anpaßt.

Wesentliche weitere Vorteile der Erfindung ergeben sich aus weiteren Unteransprüchen, der nachfolgenden Beschreibung und der Zeichnung. In der Zeichnung zeigen:
- Fig. 1: ein Ausführungsbeispiel eines selbstfahrenden Feldhäckslers nach der Erfindung;
- Fig. 2: ausschnittsweise in einer Seitenansicht Teile des Ausführungsbeispiels mit Darstellung (teilweise) des Einzugsgehäuses mit Einzugswalzen, Korncracker und Häckselvorrichtung sowie Antrieb, jedoch ohne dem Einzugsgehäuse vorgeordneten Teilen;

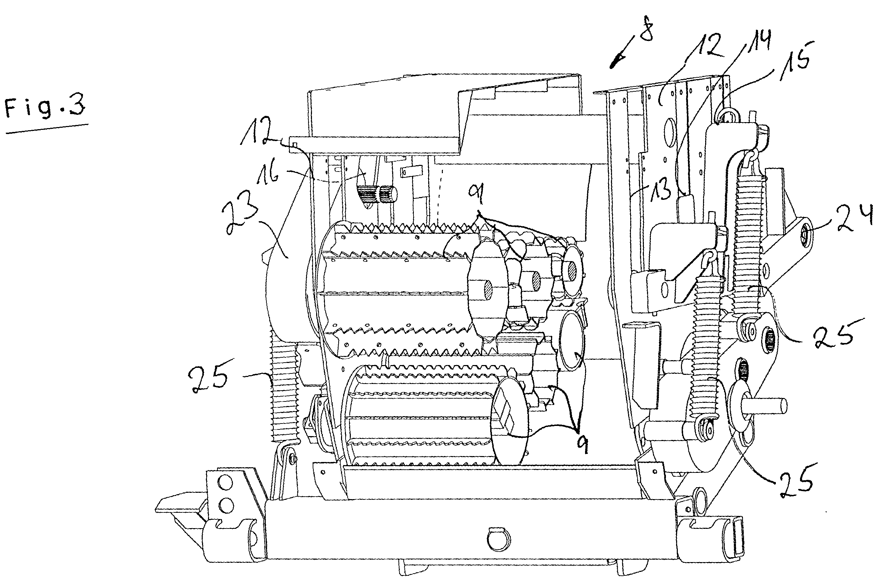

- Fig. 3: eine zu Fig. 2 analoge Darstellung schräg von vorne rechts in ausschnittsweiser perspektivischer Darstellung,

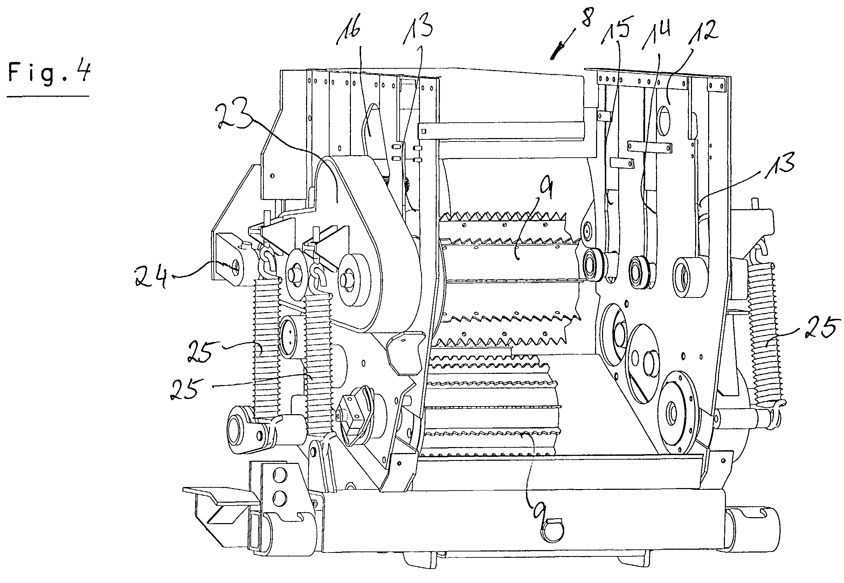

- Fig. 4: eine zu Fig. 3 analoge Darstellung schräg von vorne (links);
- Fig. 5: eine zu Fig. 3 ebenfalls analoge Darstellung (ausschnittsweise) mit Darstellung des Antriebs der Einzugswalzen,
- Fig. 6: eine Einzeldarstellung eines Ausführungsbeispiels einer Häckseltrommel für eine Erntemaschine nach der Erfindung.

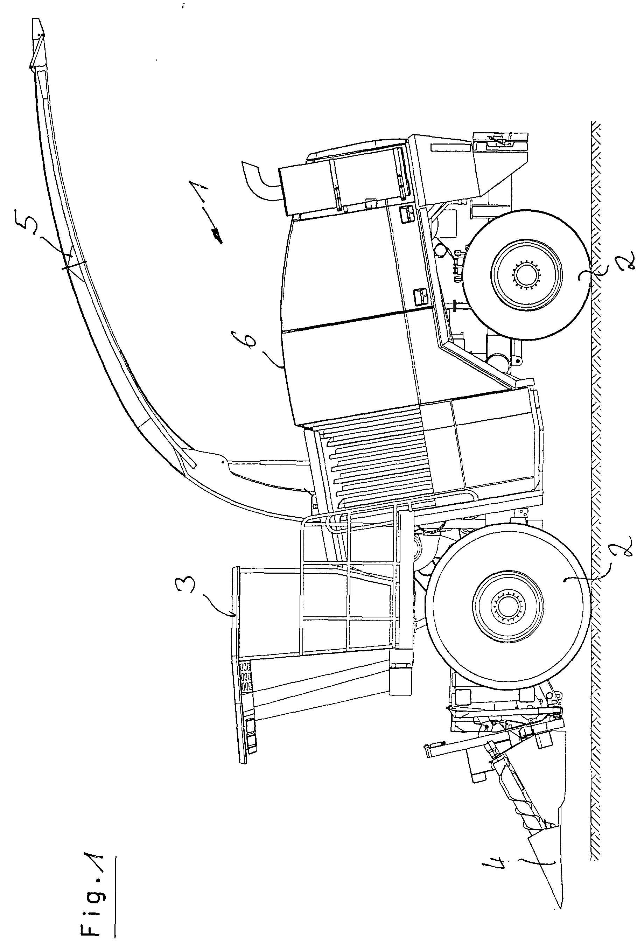

Der in Fig. 1 ganz allgemein dargestellte Feldhäcksler 1 hat Räder 2, eine Kabine 3, ein im Ausführungsbeispiel vorgebautes Maisgebiß 4, ein Auswurfrohr 5 und innerhalb des Gehäuses 6 angeordnete Einheiten wie Antrieb, Getriebe, Häckselvorrichtung, Korncracker und dergleichen feldhäckslertypische Aggregate.

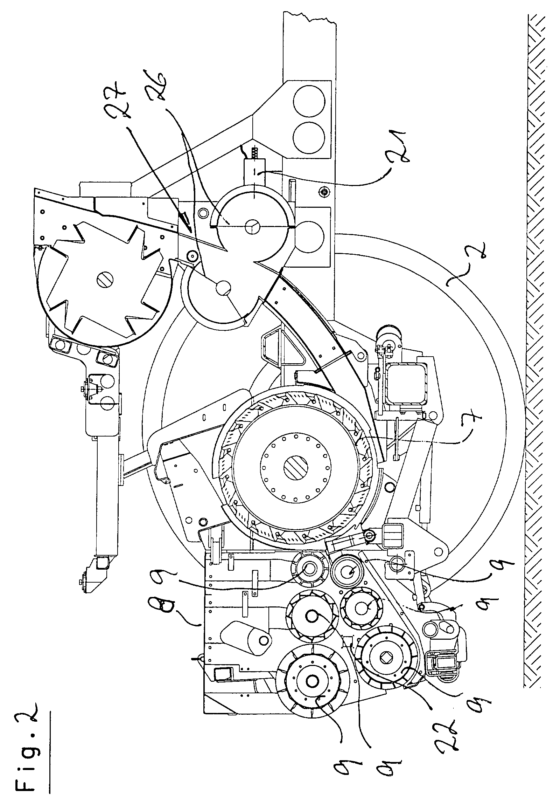

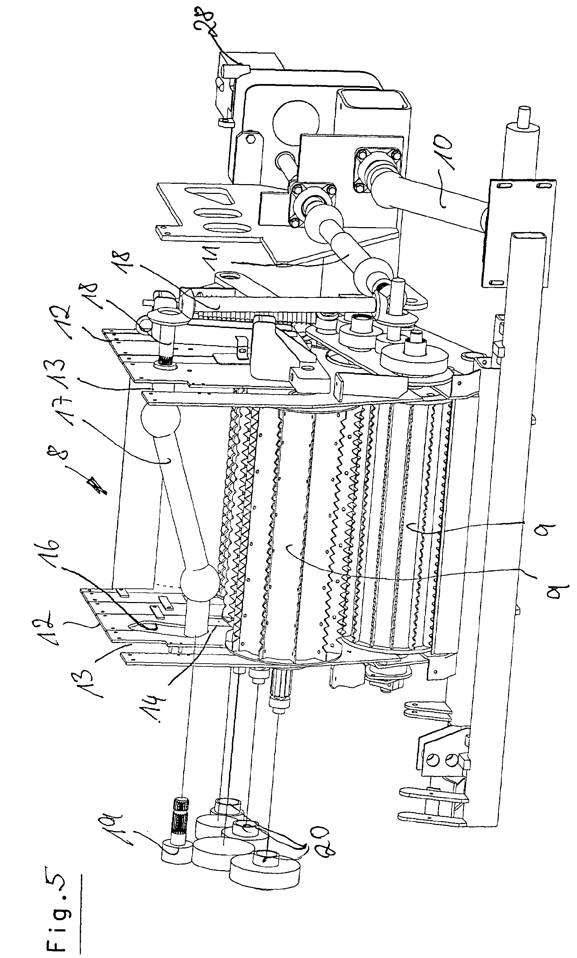

Das im einzelnen der Häckseleinrichtung 7 (Fig. 2) vorgeordnete Einzugsgehäuse 8 hat Zuführelemente 9 in Gestalt von in Einzugsförderrichtung hintereinander und übereinander angeordneten Einzugswalzen, sowie im einzelnen nicht weiter sichtbare weitere Einzugsorgane wie z. B. Pickup mit Zuführschnecken, die von einer Gelenkwelle 10 über im einzelnen nicht näher sichtbare Getriebeeinheiten anzutreiben sind (Fig. 5).

In dem gezeigten Ausführungsbeispiel sind insgesamt sechs Einzugswalzen 9 vorgesehen, und zwar jeweils drei untere Einzugswalzen 9 und drei obere Einzugswalzen 9. Die unteren Einzugswalzen 9, die sich in Einzugsförderrichtung vom Durchmesser her verkleinern, sind ortsfest vorgesehen und über eine Gelenkwelle 11 (Fig. 5) angetrieben. Die oberen Einzugswalzen 9 sind lageveränderlich in den Seitenwänden 12 des Einzugsgehäuses 8 in parallel zueinander ausgerichteten Führungen 13, 14 und 15 geführt. Der Antrieb der oberen Einzugswalzen 9 erfolgt über eine Kardangelenkwelle 7, die sich von der - in Einzugsförderrichtung gesehen - rechten Gehäuseseitenwand 12 quer durch das Einzugsgehäuse 8 hindurch bis zur - in Einzugsförderrichtung gesehen - - linken Seitenwand des Einzugsgehäuses 8 erstreckt. Auf der linken Seite der Gehäuseseitenwandung 12 ist eine weitere Führung 16 für die Kardangelenkwelle 17 vorgesehen, so daß diese mit den oberen Einzugswalzen 9 ebenfalls lageveränderlich ist und sich mithin unterschiedlichen Gutströmmengen anpassen kann. Der Antrieb der oberen Einzugswalzen 9 erfolgt mithin von der - in Einzugsförderrichtung gesehen - rechten Seite über die Gelenkwelle 8 und weitere Antriebsmittel 18 durch das Einzugsgehäuse (8) auf ein Zahnrad 19, über das alle oberen Einzugswalzen durch weitere Antriebsübertragungsmittel 20 angetrieben werden.

Durch diesen gemeinsamen Antrieb, mit der das Einzugsgehäuse 8 durchsetzenden Kardangelenkwelle 17, ist auch eine drehzahlmäßige Steuerung sehr einfach zu vollziehen, wodurch unterschiedliche Schnittlängen des Erntegutes für verschiedene Einsatzzwecke auf automatischem Wege realisiert werden können, ohne daß es eines besonderen Bauaufwandes bedarf. So ist beispielsweise eine Schnittlängenverstellung von 17 mm auf 20 mm problemlos zu vollziehen, und zwar über den Motor 28 (Fig. 5), der unabhängig von dem Antrieb für die Gelenkwelle 10 zu steuern ist. Über den Feuchtigkeitssensor 22 und die nicht näher dargestellte Steuerelektronik kann damit in Abhängigkeit des Feuchtegrades des Erntegutes eine Anpassung der Geschwindigkeit der Einzugswalzen 9 erfolgen. Wird dabei mit einer höheren Geschwindigkeit gefahren, sind durch die vorgesehenen drei Einzugswalzenpaare hinreichende Wegstrecken vorhanden, um für z. B. detektierte Fremdkörper eine hinreichende Stopperstrecke zur Verfügung zu haben. Im Sinne einer Verbesserung des Silierverlaufs und einer guten Futterqualität ist neben einer Anpassung der Häcksellänge die Aufbereitungsleistung von Quetschwalzen 26 eines Korncrackers 27 in Abhängigkeit von der Feuchte des Häckselgutes von erheblichem Vorteil. Dazu wird mittels des Feuchtigkeitssensors 22 die Feuchte des Erntegutes gemessen. Über einen Spindelmotor 21 (Fig. 2) und über die nicht gezeigte Steuerelektronik erfolgt eine Anpassung z. B. der Körneraufbereitung über Veränderung des Abstandes von Quetschwalzen 26 des Korncrackers 27.

Die Einzugswalzen 9 sind aufgrund der parallelen Anordnung der Führungen 13, 14, 15 und der Schwingen 23, in denen sie gelagert sind, derart angeordnet, daß eine Parallelführung nach oben vorliegt. Dabei schwenken sie um eine hintere Achse 24. Alle drei oberen Einzugswalzen 9 schwenken danach so, daß eine gute Gutaufnahme und Abgabe an die Häckseltrommel 7 bei allen Erntebedingungen und Durchsätzen gesichert ist. Sie schwenken dabei um eine Achse 24 in ihrer Lage parallel zur Häckseleinrichtung 7, wobei sich die oberen Einzugswalzen 9 im Verhältnis zu den unteren Einzugswalzen 9 dem Gutstrom anpassen. Durch insgesamt in dem Ausführungsbeispiel vier vorgesehene Federn 25 können die Gutbedingungen durch die Federkraft einstellbar sein, wobei das Verschwenken gedämpft erfolgt.

Die Feuchtigkeit wird über den Feuchtesensor 22 gemessen, und zwar bevorzugterweise über die elektrische Leitfähigkeit des Gutes. Dazu können an Seitenwänden 12 des Einzugsgehäuses (8) z. B. zwei Sensoren vorgesehen sein, die die elektrische Leitfähigkeit ermitteln und einem Rechner aufgeben.

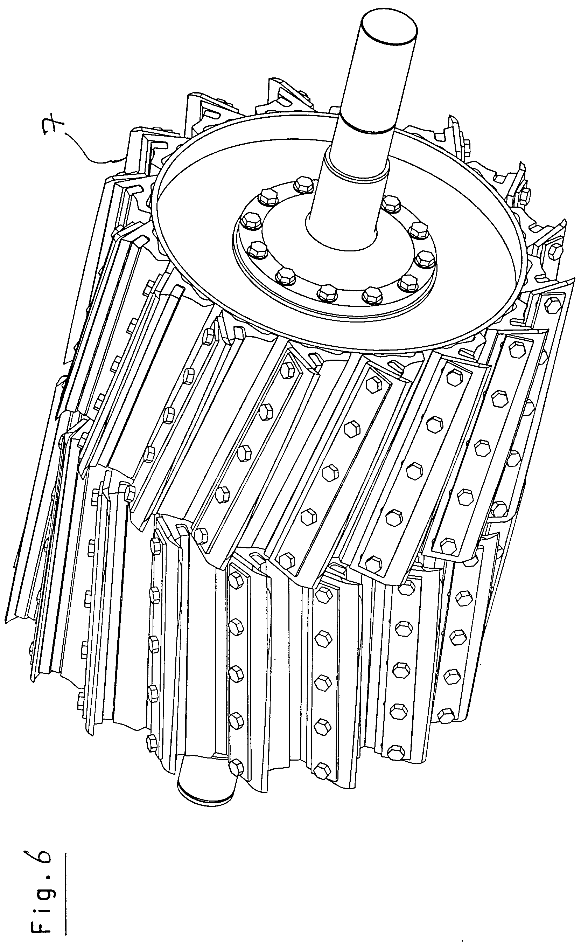

Durch den sehr langen Zuführweg mit den insgesamt sechs Einzugwalzen 9 ist es ermöglicht, hohe Zuführgeschwindigkeiten bei Sicherung einer Schnellstoppfunktion zu realisieren. Dazu sind bevorzugterweise 16 Messerpaare auf der Häckseltrommel (Fig. 6) in V-förmiger Anordnung der Messer mit einem Überschnittmaß zwischen in Umfangsrichtung nachfolgenden Messern vorgesehen (Fig. 6).

## Patentansprüche

1. Erntemaschine, insbesondere selbstfahrender Feldhäcksler zum Aufnehmen und Häckseln von Mais, Anwelkgras, Grünfutter und dergleichen Erntegut, mit einem einer Häckseleinrichtung (7) vorgeordneten, antreibbare Einzugswalzen (9) aufnehmenden Einzugsgehäuse (8), **dadurch gekennzeichnet, daß** mehr als zwei in Einzugsförderrichtung hintereinander angeordnete Einzugswalzenpaare (9) vorgesehen sind, deren jeweils obere Walzen (9) über einen gemeinsamen Antrieb (17, 18) antreibbar sind, wobei der gemeinsame Antrieb (17, 18) zur höhenveränderlichen Anpassung der oberenWalzen (9) zumindest ein das Einzugsgehäuse (8) durchsetzendes, lageveränderliches Antriebselement (17) aufweist und dieses Antriebselement (17) und die oberen Walzen (9) jeweils in einzugsgehäuseseitigen Führungen (13, 14, 15, 16) gleitverschieblich angeordnet sind.

2. Erntemaschine nach Anspruch 1, **dadurch gekennzeichnet, daß** die oberen Walzen (9) jeweils in seitlich am Einzugsgehäuse (8) angeordneten Schwingen (23) höhenveränderlich gelagert sind.

3. Erntemaschine nach Anspruch 1 oder 2, **dadurch gekennzeichnet, daß** die Schwingen (23) der oberen Walzen (9) jeweils außerhalb der Lagerstellen der oberen Walzen (9) um eine ortsfeste Achse (24) schwenkbeweglich gelagert sind.

4. Erntemaschine nach einem der Ansprüche 1 bis 3, **dadurch gekennzeichnet, daß** in Einzugsförderrichtung hintereinander insgesamt drei Einzugswalzenpaare (9) vorgesehen sind.

5. Erntemaschine nach einem der Ansprüche 1 bis 4, **dadurch gekennzeichnet, daß** für den gemeinsamen Antrieb (17, 18) der oberen Walzen (9) ein das Einzugsgehäuse (8) quer durchsetzendes Antriebselement (17) vorgesehen ist.

6. Erntemaschine nach einem der Ansprüche 1 bis 5, **dadurch gekennzeichnet, daß** das das Einzugsgehäuse (8) durchsetzende Antriebselement (17) innerhalb des Einzugsgehäuses (8) zwei Gelenkstellen aufweist.

7. Erntemaschine Anspruch 6, **dadurch gekennzeichnet, daß** die Gelenkstellen als Kardangelenke ausgebildet sind.

8. Erntemaschine nach einem der Ansprüche 1 bis 7, **dadurch gekennzeichnet, daß** das das Einzugsgehäuse (8) durchsetzende Antriebselement (17) einenends in einer diagonal ausgerichteten Führung (16) geführt ist.

9. Erntemaschine nach einem Ansprüche 8, **dadurch gekennzeichnet, daß** die oberen Walzen (9) gegen die Kraft von zumindest einer Feder (25) gleitverschieblich angeordnet sind.

10. Erntemaschine nach einem der Ansprüche 1 bis 9, **dadurch gekennzeichnet, daß** die einzugsgehäuseseitigen Führungen (13, 14, 15) für die oberen Walzen (9) parallel ausgerichtet sind.

11. Erntemaschine nach einem der Ansprüche 1 bis 10, **dadurch gekennzeichnet, daß** in Einzugsförderrichtung die Einzugswalzen (9) einen abnehmenden Walzendurchmesser aufweisen.

12. Erntemaschine nach einem der Ansprüche 1 bis 11, **dadurch gekennzeichnet, daß** die Antriebsgeschwindigkeit der Einzugswalzen (9) veränderbar ist.

13. Erntemaschine nach einem der Ansprüche 1 bis 12. **dadurch gekennzeichnet, daß** den Einzugswalzen (9) ein Metalldetektor zugeordnet ist.

14. Erntemaschine nach einem der Ansprüche 1 bis 13, **dadurch gekennzeichnet, daß** den Einzugswalzen (9) ein Feuchtigkeitssensor (22) für das Erntegut zugeordnet ist.

15. Erntemaschine nach Anspruch 14, **dadurch gekennzeichnet, daß** der Feuchtigkeitssensor (22) eine Vorrichtung zur Messung der elektrischen Leitfähigkeit aufweist.

16. Erntemaschine nach Anspruch 14 oder 15, **dadurch gekennzeichnet, daß** der Feuchtigkeitssensor (22) jeweils an einer Gehäusewandung (12) des Einzugsgehäuses (8) angeordnet ist.

17. Erntemaschine nach einem der Ansprüche 14 bis 16, **dadurch gekennzeichnet, daß** der Feuchtigkeitssensor (22) über eine Steuerelektronik mit dem Antrieb der Einzugswalzen (9) verbunden ist.

18. Erntemaschine nach einem der Ansprüche 14 bis 17, **dadurch gekennzeichnet,** da**ß** der Feuchtigkeitssensor (22) über eine Steuerelektronik mit Quetschwalzen (26) derart verbunden sind, daß in Abhängigkeit der ermittelten Feuchtigkeit ein Abstand zwischen einander zugeordneten Quetschwalzen (26) veränderbar ist.
